# EUROPÄISCHE PATENTSCHRIFT

(11) **EP 1 443 229 B1**
(45) Veröffentlichungstag und Bekanntmachung des Hinweises auf die Patenterteilung: **01.09.2010**
(21) Anmeldenummer: 04002149.5
(22) Anmeldetag: 30.01.2004
(51) Int. Cl.: F16C 29/06

(54) **Linearführungseinrichtung**
Linear guiding device
Dispositif de guidage linéaire

(30) Priorität: 31.01.2003 DE 10303948
(43) Veröffentlichungstag der Anmeldung: 04.08.2004
(73) Patentinhaber: Bosch Rexroth Mechatronics GmbH, 97424 Schweinfurt (DE)
(72) Erfinder: Rossteuscher, Heinz, 97525 Schwebheim (DE); Schlereth, Rudolf, 97705 Frauenroth (DE)
(74) Vertreter: Herzog, Markus

(56) Entgegenhaltungen:
- DE-A1- 19 806 139
- DE-U- 29 509 952
- DE-U1- 7 615 699
- US-A- 4 005 913
- US-A- 4 576 421
- US-A- 5 800 065

## Beschreibung

Die Erfindung betrifft eine Linearführungseinrichtung mit den Merkmalen des Oberbegriffs des Anspruchs 1.

Aus der DE 198 06 139 A1 ist eine gattungsgemäße Linearführungseinrichtung bekannt, welche im Bereich der axialen Enden des Laufbahnelements mit Ausnehmungen versehen ist, um ein Ausweichen des zugeordneten Endes des Laufbahnelements zu gestatten. Hierdurch soll ein gleichmäßiger Einlauf der Wälzkörper in den lasttragenden Abschnitt des Wälzkörperumlaufs auch bei Momentenbelastung und Wellendurchbiegungen sowie bei Formfehlern im Führungssystem gewährleistet werden, also bei außergewöhnlichen Belastungszuständen der Linearführungseinrichtung. Die Länge des freitragenden Abschnitts des Laufbahnelements weist dabei einen Wert auf, der erheblich kleiner ist als der Durchmesser der Wälzkörper.

Aus der DE-U-295 09 952 ist ebenfalls eine Linearführungseinrichtung nach dem Oberbegriff des Anspruchs 1 bekannt. Das Laufbahnelement dieser Linearführungseinrichtung weist ein federnd nachgiebiges Durchbiegeelement auf, welches in eine Ausnehmung einfedern kann. Das Durchbiegeelement ist dabei kürzer bemessen als die Periodenlänge der Wälzkörperkette, wobei diese Periodenlänge gleich der Summe aus dem Wälzkörperdurchmesser und der Länge der die Wälzkörper voneinander trennenden Abstandselemente ist. Dies hat zur Folge, dass jeder Wälzkörper für sich das Durchbiegeelement elastisch auslenken muss, da dieses nach jedem Wälzkörper wieder in seine entspannte Ausgangslage zurückkehrt.

Zum Stand der Technik sei der Vollständigkeit halber auch noch auf die DE-U-76 15 699, die US-A-5,800,065, die US-A-4,005,913 und die US-A-4,576,421 hingewiesen. Das Verdienst der Erfinder der vorliegenden Anmeldung besteht nicht nur darin, der Frage nachgegangen zu sein, ob sich mit einem derartigen freitragenden Abschnitt des Laufbahnelements die Laufeingeschaften der Linearführungseinrichtung auch in ganz normalen Situationen, beispielsweise dem unbelasteten Lauf verbessern lassen. Vielmehr haben sich die Erfinder auch durch die negativen Versuchsergebnisse nicht abschrecken lassen, die sie bei einer bloßen Übertragung der aus der DE 198 06 139 A1 bekannten Maßnahmen, insbesondere der Anwendung des aus dieser Druckschrift bekannten kurzen freitragenden Abschnitts, erhielten, sondern haben weitere Untersuchungsarbeiten und Versuchsreihen durchgeführt. Dabei haben sie herausgefunden, dass sich auch im normalen Betrieb der Linearführungseinrichtungen die Laufeigenschaften, insbesondere die Reibungseigenschaften und Ablaufgenauigkeit, dadurch verringern lassen, dass man eine Linearführungseinrichtung mit den Merkmalen des Anspruchs 1 einsetzt.

Dies gilt insbesondere für Linearführungseinrichtungen, bei denen das Laufbahnelement aus Stahl gefertigt ist und die Dicke des freitragenden Abschnitts des Laufbahnelements zwischen etwa 1 mm und etwa 30 mm beträgt, und bei denen die Wälzkörper aus Stahl oder Keramik gefertigt sind, einen Durchmesser zwischen etwa 1 mm und etwa 20 mm aufweisen. Die beim Eintritt der Wälzkörper in den lasttragenden Abschnitt des Wälzkörperumlaufs auftretende Gesamtverformung der Wälzkörper einerseits und der Laufbahnen in Führungsschiene und Führungswagen bzw. Laufbahnelement andererseits weist einen Wert von höchstens etwa 100 µm auf. Der genaue Wert dieser Gesamtverformung lässt sich mit der Formel nach Herz berechnen. Erfahrungsgemäß liegen die Beiträge der Wälzkörper und Laufbahnen jedoch etwa in der gleichen Größenordnung.

Bei Beachtung der erfindungsgemäßen Bemessungsregel lassen sich deutlich bessere Laufeigenschaften und niedrigere Reibkräfte, insbesondere niedrigere Reibkraftschwankungen, erzielen, als bei herkömmlichen Linearführungseinrichtungen, insbesondere als bei der gattungsbildenden Linearführungseinrichtung nach der DE 198 06 139 A1. Und dies deshalb, weil durch die erfindungsgemäße Bemessungsregel sichergestellt ist, dass die Wälzkörper lastfrei in den Bereich des lasttragenden Abschnitts des Wälzkörperumlaufs einlaufen, wobei sie nicht sprunghaft, sondern allmählich Last übernehmen.

Durch die gleichzeitige Beschränkung der Länge des freitragenden Abschnitts auf höchstens das 3,5-fache des Durchmessers der Wälzkörper kann sichergestellt werden, dass der Einlaufbereich möglichst kurz bemessen ist, so dass die Linearführungseinrichtung nach wie vor eine ausreichende Tragzahl und Steifigkeit aufweist. Bei vorgegebener Laufwagenlänge vermindert sich nämlich die Tragzahl des Laufwagens mit zunehmender Länge des Einlaufbereichs.

Sehr gute Ergebnisse können beispielsweise dann erzielt werden, wenn der freitragende Abschnitt des Laufbahnelements eine Länge aufweist, die etwa das 1,6- bis 1,9-fache des Durchmessers der Wälzkörper beträgt.

Wie die Untersuchungen der Anmelderin ferner gezeigt haben, setzt sich der freitragende Abschnitt des Laufbahnelements im Wesentlichen aus zwei Unterabschnitten zusammen, nämlich einem ersten Unterabschnitt, in welchem der freitragende Abschnitt durch das Einlaufen der Wälzkörper elastisch verformt wird, und einem zweiten Unterabschnitt, der in Folge der elastischen Verformung des ersten Unterabschnitts als Einlaufschräge für die Wälzkörper dient. In Weiterbildung der Erfindung wird vorgeschlagen, dass die Länge des elastisch verformten, ersten Unterabschnitts des freitragenden Abschnitts des Laufbahnelements höchstens das 1,5-fache des Durchmessers der Wälzkörper beträgt. Die Länge des auf Grund der elastischen Verformung des ersten Unterabschnitts als Einweisungsschräge dienenden zweiten Unterabschnitts kann dabei derart bemessen sein, dass die Wälzkörper im Bereich des freien Endes des Laufbahnelements auch tatsächlich lastfrei in den Bereich des freitragenden Abschnitts des Laufbahnelements einlaufen können.

Bei sehr steifen Laufbahnelementen, beispielsweise aus Stahl gefertigten Laufbahnelementen, deren freitragender Abschnitt eine Dicke von mehr als 15 mm aufweist, kann der Fall eintreten, dass der freitragende Abschnitt nicht nur durch einen einzigen Wälzkörper elastisch verformt wird. Aber auch in diesem Fall wird die Hauptverformung des freitragenden Abschnitts durch denjenigen Wälzkörper hervorgerufen, der dem lasttragenden Abschnitt des Wälzkörperumlaufs am nächsten angeordnet ist. Daher wird unter der ,Länge des elastisch verformten, ersten Unterabschnitts" der Abstand verstanden, den der für die Hauptverformung verantwortliche Wälzkörper dann von dem lasttragenden Abschnitt des Wälzkörperumlauf hat, wenn der ihm vorauslaufende Wälzkörper gerade in den lasttragenden Abschnitt des Wälzkörperumlauf übergetreten ist.

Um die Länge des zweiten Unterabschnitts auf einen möglichst niedrigen Wert begrenzen zu können, kann zudem zumindest ein Teil des freitragenden Abschnitts des Laufbahnelements als Einlaufschräge ausgebildet sein. D.h. das lastfreie Einlaufen der Wälzkörper wird in diesem Fall nicht nur durch die elastische Verformung des ersten Unterabschnitts, sondern auch durch entsprechende Formgebung des zweiten Unterabschnitts und gewünschtenfalls auch des ersten Unterabschnitts ermöglicht.

Wie dies aus der DE 198 06 139 A1 an sich bekannt ist, kann der freitragende Abschnitt des Laufbahnelements durch eine am Führungswagen ausgebildete Ausnehmung bereitgestellt sein. Zusätzlich oder alternativ ist es jedoch auch möglich, dass der freitragende Abschnitt des Laufbahnelements durch eine an dem Laufbahnelement selbst ausgebildete Ausnehmung bereitgestellt ist.

Bei Linearführungseinrichtungen werden üblicherweise auch Messeinrichtungen zur Positionserfassung eingesetzt. Den bekannten Messeinrichtungen liegen verschiedene Messprinzipien zu Grunde. Einige dieser Messprinzipien, beispielsweise das aus der EP 1 164 358 A1 bekannte induktive Messprinzip, reagieren dabei empfindlich auf Änderungen des Abstands zwischen dem Führungswagen, an dem der Sensor angeordnet ist, und der Führungsschiene, an der die eine Graduierung aufweisende Messskala angeordnet ist. Nun kommt es aber bei der herkömmlich für Linearführungseinrichtungen auf Grund der vergleichsweise sprunghaften Lastaufnahme beim Eintritt der Wälzkörper in den lasttragenden Abschnitt des Wälzkörperumlaufs zu einer Taumelbewegung des Führungswagens relativ zur Führungsschiene. Die von dieser Taumelbewegung herrührenden Einflüsse auf das Positionserfassungssignal müssen durch relativ aufwendige Kompensationsverfahren aus diesem beseitigt werden. Durch den Einsatz eines freitragenden Abschnitts an einem mit dem Führungswagen verbundenen Laufbahnelement kann, insbesondere dann, wenn dieser freitragende Abschnitt die erfindungsgemäße Abmessung aufweist, die Taumelbewegung des Führungswagens relativ zur Führungsschiene und somit auch deren Einfluss auf das Positionserfassungssignal vermindert werden.

Die Erfindung wird im Folgenden an einem Ausführungsbeispiel anhand der beigefügten Zeichnung näher erläutert werden. Es stellt dar:

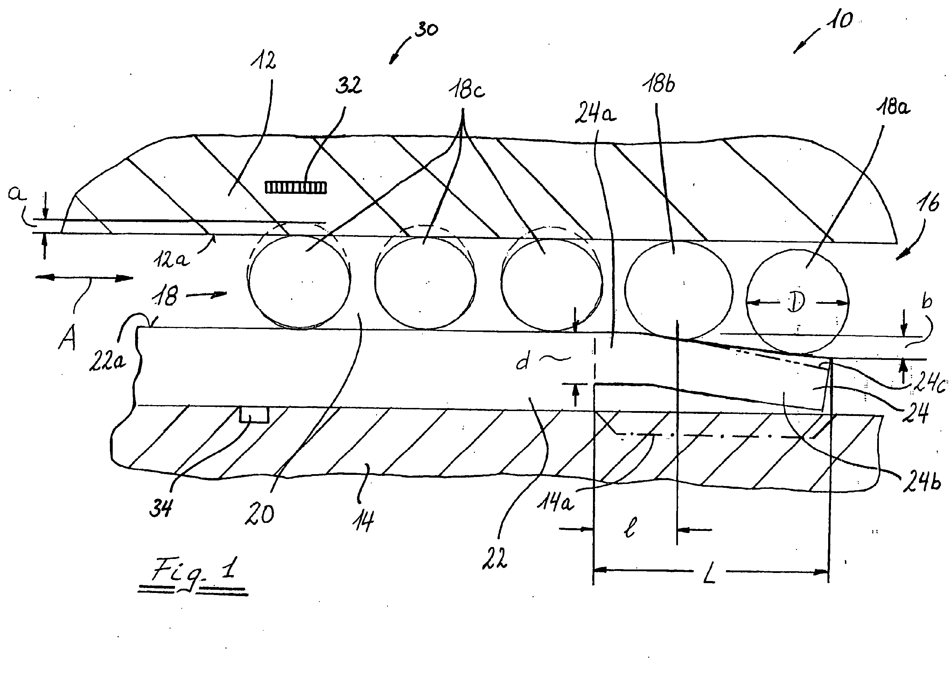

- Fig. 1: einen schematischen Teilschnitt einer erfindungsgemäßen Linearführungseinrichtung.

In Fig. 1 ist eine erfindungsgemäße Linearführungseinrichtung ganz allgemein mit 10 bezeichnet. Sie umfasst eine Führungsschiene 12, auf der ein Führungswagen 14 in Längsrichtung A der Führungsschiene 12 hin- und herbewegbar angeordnet ist. Ferner umfasst die Linearführungseinrichtung 10 einen Wälzkörperumlauf 16, in welchem eine endlose Reihe von Wälzkörpern 18 umläuft.

In Fig. 1 ist lediglich ein Teil eines lasttragenden Abschnitts 20 des Wälzkörperumlaufs 16 dargestellt. Die Wälzkörper 18 laufen in der Darstellung gemäß Fig. 1 von rechts in diesen lasttragenden Abschnitt 20 ein und gelangen dabei in lasttragenden Eingriff mit einer Führungsbahn 12a, die an der Führungsschiene 12 ausgebildet ist, sowie mit einer Laufbahn 22a, die an einem Laufbahnelement 22 ausgebildet ist, welches wiederum mit dem Laufwagen 14 verbunden ist.

Im Bereich des Wälzkörpereinlaufs ist in dem dargestellten Ausführungsbeispiel das Laufbahnelement 22 hinterschnitten ausgebildet. Durch diese Hinterschneidung weist es einen freitragenden Abschnitt 24 auf, der nicht am Führungswagen 14 abgestützt ist. Unter dem Einfluss der einlaufenden Wälzkörper 18 wird dieser freitragende Abschnitt 24 in seinem an den Hauptkörper des Laufbahnelements 22 angrenzenden Unterabschnitt 24a elastisch verformt, sodass der an das freie Ende des freitragenden Abschnitts 24 angrenzende Unterabschnitt 24b als Einweisungsschräge für die Wälzkörper 18 dienen kann. Gemäß Fig. 1 wird der freitragende Abschnitt 24 insgesamt um die Distanz b ausgelenkt.

Läuft nun ein Wälzkörper 18 in Fig. 1 von rechts in den Einlaufbereich des lasttragenden Abschnitts 20 des Wälzkörperumlaufs 16 ein, so ist er zunächst noch vollkommen lastfrei (Wälzkörper 18a). Mit fortschreitender Weiterbewegung in Fig. 1 nach links gelangt der Wälzkörper dann in Anlage an die Führungsbahn 12a und die Laufbahn 22a, wobei er zunächst noch unverformt ist (Wälzkörper 18b). Schließlich übernimmt er lasttragende Funktion, wobei er zwischen der Führungsbahn 12a des Führungswagens 12 und der Laufbahn 22a des Laufbahnelements 22 um den Betrag a elastisch zusammengedrückt wird. Dies ist in Fig. 1 für die Wälzkörper 18c dargestellt, welche sich bereits in dem eigentlichen lasttragenden Abschnitt 20 des Wälzkörperumlaufs befinden. Für diese Wälzkörper 18c ist gestrichelt ihre undeformierte Gestalt dargestellt. Die vorstehend beschriebene elastische Verformung des freitragenden Abschnitts 24 und insbesondere dessen Unterabschnitts 24a ist eine Folge der von den Wälzkörpern 18 im Zuge des Zusammendrückens auf den freitragenden Abschnitt 24 ausgeübten Gegenkraft.

Um sicherstellen zu können, dass die Wälzkörper 18 vollkommen lastfrei in den Einlaufbereich, d.h. in den Bereich des freitragenden Abschnitts 24 des Laufbahnelements 22 einlaufen können, muss die Auslenkung b des freitragenden Abschnitts größer sein als das Maß a der Deformation der Wälzkörper 18. Im Hinblick auf die Bereitstellung einer möglichst hohen Tragzahl der Linearführungseinrichtung 10 sollte die Länge L das freitragenden Abschnitts 24 jedoch höchstens das 3,5-fache des Durchmessers D der Wälzkörper 18 betragen.

In analoger Weise hat sich gezeigt, dass die Länge I des elastisch verformten Unterabschnitts 24a des freitragenden Abschnitts 24 höchstens das 1,5-fache des Durchmessers D der Wälzkörper 18 betragen sollte. Um das allmähliche Zusammendrücken der Wälzkörper 18 beim Einlaufen in den lasttragenden Abschnitt 20 des Wälzkörperumlaufs 16 ohne übermäßige elastische Verformung des freitragenden Abschnitts 24 sicherstellen zu können, wird bei einem aus Stahl gefertigten Laufbahnelement 20 für die Dicke d des freitragenden Abschnitts 24 ein Wert von zwischen etwa 1 mm und etwa 30 mm gewählt.

Zusätzlich oder alternativ zu der Hinterschneidung des Laufbahnelements 22 kann der freitragende Abschnitt 24 dieses Laufbahnelements 22 auch durch Ausbilden einer Ausnehmung 14a am Führungswagen bereitgestellt werden. Diese Ausnehmung 14a ist in Fig. 1 strich-punktiert angedeutet.

Um das lastfreie Einlaufen der Wälzkörper 18 auch ohne allzu starke elastische Verformung des freitragenden Abschnitts 24 sicherstellen zu können, kann zudem zumindest ein Teil des freitragenden Abschnitts 24 mit einer Einlaufschräge 24c ausgebildet sein, die in Fig. 1 strich-punktpunktiert angedeutet ist.

Die erfindungsgemäße Linearführungseinrichtung 10 ist ferner mit einer in Fig. 1 lediglich schematisch dargestellten, induktiven Positionserfassungsvorrichtung 13 versehen, welche eine an der Führungsschiene 12 angeordnete Messskala 32 und einem am Führungswagen 14 angeordneten Sensor 34 umfasst. Bekanntermaßen reagiert das Erfassungssignal der induktiven Positionserfassungsvorrichtung 30 relativ empfindlich auf Änderungen des Abstands zwischen dem Führungswagen 14 und der Führungsschiene 12. In diesem Zusammenhang hat der Einsatz des erfindungsgemäßen freitragenden Abschnitts 24 am Laufbahnelement 22 den Vorteil, dass hierdurch die vom Einlaufen der Wälzkörper 18 in den lasttragenden Abschnitt 20 herrührende Taumelbewegung des Führungswagens 14 relativ zur Führungsschiene 12 gering gehalten werden kann.

## Patentansprüche

1. Linearführungseinrichtung (10), umfassend:
- eine Führungsschiene (12),
- einen auf der Führungsschiene (12) in deren Längsrichtung (A) hin- und herbewegbaren Führungswagen (14), und
- einen Wälzkörperumlauf (16), in dem eine endlose Reihe von Wälzkörpern (18) umläuft,
wobei der Wälzkörperumlauf (16) einen lasttragenden Abschnitt (20) aufweist, in dem die Wälzkörper (18) zum einen mit einer Führungsbahn (12a) der Führungsschiene (12) und zum anderen mit einer Laufbahn (22a) des Führungswagens (14) in lasttragendem Eingriff stehen,
wobei die Laufbahn (22a) des Führungswagens (14) an einem mit dem Führungswagen (14) verbundenen Laufbahnelement (22) ausgebildet ist, welches zumindest an seinem wälzkörpereinlaufseitigen Ende einen freitragenden Abschnitt (24) aufweist, der nicht an dem Führungswagen (14) abgestützt ist, und
wobei der freitragende Abschnitt (24) des Laufbahnelements (22) einen an einen Hauptkörper des Laufbahnelements (22) angrenzenden, ersten Unterabschnitt (24a) umfasst, in welchem der freitragende Abschnitt (24) durch das Einlaufen der Wälzkörper (18) elastisch verformt wird,
**dadurch gekennzeichnet, dass** die Länge (I) des ersten Unterabschnitts (24a) des freitragenden Abschnitts (24) des Laufbahnelements (22) durch den Abstand bestimmt ist, den der für die Hauptverformung verantwortliche Wälzkörper (18) dann von dem lasttragenden Abschnitt (20) des Wälzkörperumlaufs (16) hat, wenn der ihm vorauslaufende Wälzkörper (18) gerade in den lasttragenden Abschnitt (20) des Wälzkörperumlaufs (16) übergetreten ist, und
dass der freitragende Abschnitt (24) ferner einen an das freie Ende des freitragenden Abschnitts (24) angrenzenden, zweiten Unterabschnitt (24b) umfasst, der in Folge der elastischen Verformung des ersten Unterabschnitts (24a) als Einlaufschräge für die Wälzkörper (18) dient.

2. Linearführungseinrichtung nach Anspruch 1,
**dadurch gekennzeichnet, dass** die Länge (L) des freitragenden Abschnitts (24) höchstens das 3,5-fache des Durchmessers (D) der Wälzkörper (18) beträgt.

3. Linearführungseinrichtung nach Anspruch 1 oder 2,
**dadurch gekennzeichnet, dass** der freitragende Abschnitt (24) des Laufbahnelements (22) eine Länge (L) aufweist, die etwa das 1,6- bis 1,9-fache des Durchmessers (D) der Wälzkörper (18) beträgt.

4. Linearführungseinrichtung nach einem der Ansprüche 1 bis 3,
**dadurch gekennzeichnet, dass** die Länge (I) des elastisch verformten Unterabschnitts (24a) des freitragenden Abschnitts (24) des Laufbahnelements (22) höchstens das 1,5-fache des Durchmessers (D) der Wälzkörper (18) beträgt.

5. Linearführungseinrichtung nach einem der Ansprüche 1 bis 4,
**dadurch gekennzeichnet, dass** der freitragende Abschnitt (24) des Laufbahnelements (22) durch eine am Führungswagen (14) ausgebildete Ausnehmung (14a) bereitgestellt ist.

6. Linearführungseinrichtung nach einem der Ansprüche 1 bis 5,
**dadurch gekennzeichnet, dass** der freitragende Abschnitt (24) des Laufbahnelements (22) durch eine an dem Laufbahnelement (24) selbst ausgebildete Ausnehmung bereitgestellt ist.

7. Linearführungseinrichtung nach einem der Ansprüche 1 bis 6,
**dadurch gekennzeichnet, dass** sie eine Positionserfassungsvorrichtung (30) umfasst, vorzugsweise eine induktive Positionserfassungsvorrichtung, mit einer an einem der Elemente, Führungsschiene (12) oder Führungswagen (14), angeordneten Messskala (32) und einem am jeweils anderen Element, Führungswagen (14) oder Führungsschiene (12), angeordneten Sensor (34.)

## Claims

1. A linear guide device (10), comprising
- a guide rail (12),
- a guide carriage (14) which can move in reciprocating movement on the guide rail (12) in the longitudinal direction (A) thereof, and
- a rolling body recirculating unit (16) in which an endless row of rolling bodies rotate,
wherein the rolling body recirculating unit (16) has a load-bearing portion (20), in which, one the one hand, the rolling bodies (18) are in load-bearing engagement with a guide track (12a) of the guide rail (12) and, on the other hand, with a track (22a) of the guide carriage (14),
wherein the track (22a) of the guide carriage (14) is formed on a track element (22) which is connected to the guide carriage (14) and which, at least at its rolling body entry-side end, has an unsupported portion (24) which is not supported on the guide carriage (14), and
wherein the unsupported portion (24) of the track element (22) comprises a first sub-portion (24a) which adjoins a main body of the track element (22) and in which the unsupported portion (24) is elastically deformed by the entry of the rolling bodies (18),
**characterised in that** the length (1) of the first sub-portion (24a) of the unsupported portion (24) of the track element (22) is determined by the distance which the rolling body (18) responsible for the main deformation then has from the load-bearing portion (20) of the rolling body recirculating unit (16) when the rolling body (18) preceding it has just passed into the load-bearing portion (20) of the rolling body recirculating unit (16), and
**in that** the unsupported portion (24) further comprises a second sub-portion (24b) which adjoins the free end of the unsupported portion (24) and which, as a result of the elastic deformation of the first sub-portion (24a), serves as an entry slope for the rolling bodies (18).

2. A linear guide device according to Claim 1, **characterised in that** the length (L) of the unsupported portion (24) amounts at most to 3.5 times the diameter (D) of the rolling bodies.

3. A linear guide device according to Claim 1 or 2, **characterised in that** the unsupported portion (24) of the track element (22) has a length (L) which is approximately 1.6 to 1.9 times the diameter (D) of the rolling bodies (18).

4. A linear guide device according to any one of Claims 1 to 3, **characterised in that** the length (1) of the elastically deformable sub-portion (24a) of the unsupported portion (24) of the track element (22) amounts at most to 1.5 times the diameter (D) of the rolling bodies (18).

5. A linear guide device according to any one of Claims 1 to 4, **characterised in that** the unsupported portion (24) of the track element (22) is provided by a recess (14a) formed on the guide carriage (14).

6. A linear guide device according to any one of Claims 1 to 5, **characterised in that** the unsupported portion (24) of the track element (22) is provided by a recess formed on the track element (24) [sic] itself.

7. A linear guide device according to any one of Claims 1 to 6, **characterised in that** it comprises a position-detecting device (30), preferably an inductive position-detecting device, with a measuring scale (32) disposed on one of the elements, guide rail (12) or guide carriage (14), and a sensor (34) disposed on the respective other element, guide carriage (14) or guide rail (12).

## Revendications

1. Dispositif de guidage linéaire (10) comprenant :
- un rail de guidage (12),
- un chariot de guidage (14) mobile alternativement sur le rail de guidage (12) dans son sens longitudinal (A), et
- une circulation de corps de roulement (16), dans laquelle une rangée sans fin de corps de roulement (18) circule,
la circulation de corps de roulement (16) présentant une section (20) portant la charge, dans laquelle les corps de roulement (18) se trouvent en engagement de porte-charge d'une part avec une voie de guidage (12a) du rail de guidage (12) et d'autre part avec une voie de roulement (22a) du chariot de guidage (14),
la voie de roulement (22a) du chariot de guidage (14) étant réalisée sur un élément de voie de roulement (22) relié au chariot de guidage (14) qui présente au moins sur son extrémité côté entrée des corps de roulement, une section (24) en porte-à-faux qui n'est pas en appui sur le chariot de guidage (14), et
la section (24) en porte-à-faux de l'élément de voie de roulement (22) comprenant une première section inférieure (24a) contiguë à un corps principal de l'élément de voie de roulement (22), dans laquelle la section (24) en porte-à-faux est déformée élastiquement par l'entrée des corps de roulement (18),
**caractérisé en ce que** la longueur (1) de la première section inférieure (24a) de la section (24) en porte-à-faux de l'élément de voie de roulement (22) est déterminée par la distance que présente le corps de roulement (18) responsable de la déformation principale par rapport à la section (20) portant la charge de la circulation de corps de roulement (16) lorsque le corps de roulement (18) le précédant est entré juste dans la section (20) portant la charge de la circulation de corps de roulement (16), et
**en ce que** la section (24) en porte-à-faux comprend de plus une seconde section inférieure (24b) contiguë à l'extrémité libre de la section (24) en porte-à-faux qui sert à la suite de la déformation élastique de la première section inférieure (24a) de biais d'introduction pour les corps de roulement (18).

2. Dispositif de guidage linéaire selon la revendication 1,
**caractérisé en ce que** la longueur (L) de la section (24) en porte-à-faux s'élève au maximum à 3,5 fois le diamètre (D) des corps de roulement (18).

3. Dispositif de guidage linéaire selon la revendication 1 ou 2,
**caractérisé en ce que** la section (24) en porte-à-faux de l'élément de voie de roulement (22) présente une longueur (L) qui s'élève environ de 1,6 à 1,9 fois le diamètre (D) des corps de roulement (18).

4. Dispositif de guidage linéaire selon l'une quelconque des revendications 1 à 3, **caractérisé en ce que** la longueur (1) de la section inférieure (24a) déformable élastiquement de la section (24) en porte-à-faux de l'élément de voie de roulement (22) s'élève au maximum à 1,5 fois le diamètre (D) des corps de roulement (18).

5. Dispositif de guidage linéaire selon l'une quelconque des revendications 1 à 4, **caractérisé en ce que** la section (24) en porte-à-faux de l'élément de voie de roulement (22) est mise à disposition par un évidement (14a) réalisé sur le chariot de guidage (14).

6. Dispositif de guidage linéaire selon l'une quelconque des revendications 1 à 5, **caractérisé en ce que** la section (24) en porte-à-faux de l'élément de voie de roulement (22) est mise à disposition par un évidement réalisé sur l'élément de voie de roulement (24) même.

7. Dispositif de guidage linéaire selon l'une quelconque des revendications 1 à 6, **caractérisé en ce qu'**il comprend un dispositif de détection de position (30), de préférence un dispositif de détection de position inductif avec une échelle de mesure (32) disposée sur l'un des éléments, rail de guidage (12) ou chariot de guidage (14) et un capteur (34) disposé respectivement sur l'autre élément, chariot de guidage (14) ou rail de guidage (12).
